## Europäisches Patentamt
## European Patent Office
## Office européen des brevets

(19)

(11) Veröffentlichungsnummer: **0 192 718 B1**

(12) # EUROPÄISCHE PATENTSCHRIFT

(45) Veröffentlichungstag der Patentschrift: **02.09.92**

(51) Int. Cl.5: **C25B 1/00**, C01B 13/10

(21) Anmeldenummer: **85904445.5**

(22) Anmeldetag: **03.09.85**

(86) Internationale Anmeldenummer:
**PCT/EP85/00442**

(87) Internationale Veröffentlichungsnummer:
**WO 86/01542 (13.03.86 86/06)**

(54) **VERFAHREN UND VORRICHTUNG ZUR HERSTELLUNG VON OZON.**

(30) Priorität: **05.09.84 DE 3432684**
**05.09.84 DE 3432652**

(43) Veröffentlichungstag der Anmeldung:
**03.09.86 Patentblatt 86/36**

(45) Bekanntmachung des Hinweises auf die Patenterteilung:
**02.09.92 Patentblatt 92/36**

(84) Benannte Vertragsstaaten:
**AT BE CH DE FR GB IT LI LU NL SE**

(56) Entgegenhaltungen:
**EP-A- 0 041 365**
**DE-A- 3 003 781**
**FR-A- 2 151 024**
**US-A- 3 256 164**

**Dissertation of J.C. Thanos. Technische Universität München, Juni 1981**

(73) Patentinhaber: **Wabner, Dietrich, Prof. Dr.**
**Danzigerstrasse 62**
**W-8046 Garching(DE)**

Patentinhaber: **TILLMETZ, Werner**
**Untere Ebenhalde 38**
**W-8992 Wasserburg/Bodensee(DE)**

Patentinhaber: **GNANN, Michael**
**Wendenstrasse 5**
**W-8068 Pfaffenhofen(DE)**

(72) Erfinder: **Wabner, Dietrich, Prof. Dr.**
**Danzigerstrasse 62**
**W-8046 Garching(DE)**
Erfinder: **TILLMETZ, Werner**
**Untere Ebenhalde 38**
**W-8992 Wasserburg/Bodensee(DE)**
Erfinder: **GNANN, Michael**
**Wendenstrasse 5**
**W-8068 Pfaffenhofen(DE)**

EP 0 192 718 B1

Chemical Abstracts, Band 92, Nr. 12, 24. März 1980, Columbus, Ohio (US), H.P. Fritz et al.: "Electrochemical syntheses. XVII. Ozone synthesis by electrolysis of water", siehe Seite 474, Spalte 1, Zusammenfassung 101404q & Z. Naturforsch. B. Anorg. Chem. Org. Chem. 34 B(12) 1979, 1617-27

Chemical Abstracts, Band 98, Nr. 12, März 1983, Columbus, Ohio (US) siehe Seite 532, Spalte 1, Zusammenfassung 97987m, & JP, A, 5745835 (SAWA CHEMICAL K.K.) 30. September 1982

(74) Vertreter: **Müller-Boré & Partner Patentanwälte**
**Isartorplatz 6 Postfach 26 02 47**
**W-8000 München 2(DE)**

## Beschreibung

Die Erfindung betrifft ein Verfahren zur Herstellung von Ozon mit einer oder mehreren Anoden aus Bleidioxid oder mit einer oder mehreren mit Bleidioxid beschichteten Anoden aus einem Salzelektrolyten mittels Gleichstromelektrolyse und Trennung von Kathoden-und Anodengas. Die Erfindung betrifft ferner eine Vorrichtung zur Durchführung des Verfahrens, mit einem Behälter, mit einer oder mehreren Anoden aus Bleidioxid oder mit einer oder mehreren mit Bleidioxid beschichteten Anoden und mit einer oder mehreren Kathoden, wobei die Kathoden- und Anodenräume im Bereich der Gassammelräume voneinander getrennt sind und wobei der Anodengassammelraum von einer von einem Deckel des Behälters zur Bodenfläche des Behälters hin vorstehenden Wandung abgegrenzt ist.

Das bisher nahezu ausschließlich verwendete Verfahren zur Produktion von Ozon ist das Siemensverfahren, bei dem Ozon durch Einwirkung stiller elektrischer Entladungen aus $O_2$ gebildet wird.

Dabei entsteht Ozon in einer Konzentration von maximal ca 7 Gew.% im Endgas, wo es nur durch sehr aufwendige und zum Teil auch höchst gefährliche Verfahren weiter angereichert werden kann.

Dazu sind bei einem der modernsten Verfahren mindestens zwei große Absorberbehälter mit Silicagelfüllung notwendig, die im ständigen Wechsel be- und entladen werden. Zusätzlich werden auch noch aufwendige Pump- und Regeleinrichtungen benötigt.

Diese Anlagen sind zur Erzeugung großer Ozonmengen, wie sie in Wasserwerken benötigt werden, interessant, während für Geräte mit einer Ozonleistung unter ca.$10gO_3 \cdot l^{-1}$der apparative Aufwand ein immer ungünstigeres Verhältnis zur erzeugten Ozonmenge bekommt und diese Geräte somit immer unwirtschaftlicher macht, je kleiner die Leistung ist. In diesem Leistungsbereich sind Anlagen nach dem Siemensverfahren unverhältnismäßig groß und schwer, haben einen schlechten Wirkungsgrad, sind schlecht regelbar, erreichen nur eine relativ geringe Ozonkonzentration und sind im Verhältnis zu ihrer Leiszung sehr teuer und damit unwirtschaftlich.

Ein elektrolytisches Verfahren zur Erzeugung von Ozon wurde bereits 1840 von Schönbein angegeben (Ann. Phys. Chem 50,(1840),617) bei dem durch Elektrolyse von Schwefelsäure mit Platinanoden Ozon in sehr geringer Menge als Nebenprodukt an der Anode entstand.

Die bisherigen elektrolytischen Verfahren hatten erhebliche Nachteile, sodaß bisher keines Einzug in die Technik gefunden hat. Mehrere Verfahren arbeiten unter hohem Kühlaufwand bei sehr tiefen Temperaturen (-40 bis - 60°C) mit Edelmetallelektroden und sehr hohen Stromdichten, da nur unter diesen Bedingungen in den als Elektrolyton verwendeten konzentrierten Säuren nennenswerte Ozonausbeuten erzielt werden konnten.

Mit einer anderen Methode (EP 0041 365 A1) werden zwar bei Raum- oder Kühlwassertemperatur sehr hohe Ozonausbeuten erreicht, doch der verwendete Elektrolyt enthält $HPF_6$ - (Hexafluorophosphorsäure), so daß sich Korrosionsprobleme sowohl bei den Elektroden als auch beim Zellenmaterial ergeben, abgesehen von der Gefährdung der Anwender dieses Verfahrens. Außerdem bildet das an der Anode entwickelte $O_2/O_3$ Gemischmit dem Elektrolyten einen schwer trennbaren zähen Schaum.

Gemäß US-A 3256 164 wird hochkonzentrierte Flußsäure als Elektrolyt verwendet und es entsteht ein Gemisch von $O_3$, $F_2O$, $H_2$ und $O_2$.

Ein weiteres bisher bekanntes Verfahren gemäß DE-OS 3003781, daß mit einer speziellen Titan - Bleidioxid - Verbundelektrode arbeitet und als Elektrolyten verdünnte, leicht saure bis leicht alkalische Perchloratlösungen bzw. leicht alkalische Hydrogenphosphatlösungen verwendet, weist die vorher genannten Materialprobleme nicht auf, hat aber auch Nachteile:

1. Für die Herstellung der Elektroden ist ein kompliziertes, zeitaufwendiges Verfahren notwendig

2. Die Ozonausbeute erreicht nicht einen wirtschaftlich verwertbaren Bereich.

3. Die verdünnten Elektrolyten haben einen hohen Elektrolytwiderstand; und damit ist eine hohe Zellspannung verbunden, die wiederum einen erhöhten Stromverbrauch und eine vermehrte Kühlung nach sich zieht, sodaß höhere Stromdichten große Probleme aufwerfen.

In der Dissertation Thanos (Techn. Universität München) vom 23.6.1981 ist die Ozonerzeugung in $KH_2PO_4/K_2HPO_4$-Elektrolyten verschiedener Konzentration gezeigt.

Der Erfindung liegt die Aufgabe zugrunde, ein Verfahren und eine Vorrichtung zu entwickeln, mit denen ohne Korrosionsprobleme Ozon in hoher Konzentration und hoher, wirtschaftlich verwertbarer Ausbeute und gut regelbarer Menge elektrolytisch hergestellt werden kann.

Diese Aufgabe wird erfindungsgemäß dadurch gelöst, daß in einem wässrigen $K_2HPO_4/KH_2PO_4$-Elektrolyten oder Natriumsulfat-Elektrolyten als Salzpufferelektrolyt in einem pH-Bereich von 4 bis 10 gearbeitet wird, dessen Konzentration so hoch gewählt wird, daß sich durch die anodische Ansäuerung keine Kristallisation auf der Anode bzw. im Elektrolytgefäß ergibt, die jedoch nicht geringer als 50% seiner Sättigungskonzentration gehalten wird, und Kathoden- und Anodenraum nur im Bereich der Gassammelräume vollständig voneinander getrennt angeordnet werden, jedoch im Bereich der aktiven Elektrodenfläche eine Ionenwanderung und eine gleichmäßige Stromverteilung gewährleistet wird.

Vorzugsweise wird ein Salzpufferelektrolyt verwendet, dessen Konzentration 10 bis 50% unterhalb seiner Sättigungskonzentration liegt.

Bevorzugt wird auch die Viskosität des Elektrolyten durch primäres und sekundäres Kaliumphosphat eingestellt.

Es ist wichtig, daß die Salzkonzentration eines $K_2HPO_4/KH_2PO_4$. Pufferelektrolyten nur so hoch gewählt wird, daß sich durch die anodische Ansäuerung keine Kristallisation auf der Anode bzw. im Elektrolytgefäß ergibt. Weiterhin vorteilhaft ist ein Zusatz von F-Anionen in Form von KF in einer Menge von mindestens 200 mg $F^-$. $l^{-1}$ Lösung, da dadurch eine weitere erhebliche Steigerung der Ozonausbeute erreicht wird, die ab der angegebenen Fluoridmenge einen konstant hohen Wert erreicht. Von ebenfalls großer Bedeutung für die Ozonausbeute ist eine hohe Phosphatkonzentration in der Lösung.

Ein weiterer Vorteil der hohen Salzkonzentration ist die hohe dynamische Viskosität des Elektrolyten, welche die Trennung von Kathoden- und Anodenraum durch strömungsberuhigte Zonen mit Hilfe statischer Einbauten begünstigt. Die Einbauten behindern durch Grenzflächeneffekte gleichzeitig die Gasblasenrührung.

Fluorid liegt insbesondere in einer Menge von 200 bis 3000 mg/l vor und die Arbeitstemperatur liegt vorzugsweise im Bereich von 5°C bis 50 °C.

Gemäß einer bevorzugten Ausführungsform des erfindungsgemäßen Verfahrens wird als teildurchlässiger Separator eine Kühlschlange eingesetzt, deren einzelne Windungen solche Abstände voneinander haben, daß bei der gewählten Viskosität des Elektrolyten praktisch die Trennung von kathodisch und anodisch erzeugtem Gas bewirkt wird.

Eine als Separator verwendete Kühlschlange erbringt den Vorteil, daß sie gleichzeitig noch den Elektrolyten in einem für die Ozonausbeute besonders günstigen Temperaturbereich hält.

Ein Auskristallisieren des primären Phosphats im Anodenraum, verursacht durch dessen schlechtere Löslichkeit im Vergleich zum sek. Phosphat und die anodische Ansäuerung wird durch die nicht vollständige Trennung von Katholyt und Anolyt verhindert.

Katholyt und Anolyt vermischen sich teilweise durch die strömungsberuhigten Zonen des Separators hindurch im unteren Bereich der Zelle, ohne daß sich Anoden- und Kathodengas gleichzeitig ebenfalls mischen.

Auf Grund der geringen Aggressivität des Elektrolyten sowie seiner Ungiftigkeit werden an das Zellmaterial hinsichtlich chemischer Resistenz keine hohen Ansprüche gestellt. So können Materialien wie Glas oder Keramik problemlos verwendet werden und auch Kunststoffe wie PVC (Polyvinylchlorid) oder Polypropylen werden vom Ozon unter diesen Bedingungen nur oberflächlich angegriffen und damit gleichzeitig passiviert.

Als Kathodenmaterialien eignen sich Kupfer, Graphit, Nickel, Titan oder bestimmte Edelstähle.

Als Anodenmaterial wird Bleidioxid verwendet, welches vorzugsweise elektrochemisch in bekannter Weise in seiner $\beta$-Modifikation abgeschieden wird. Besonders gut eignen sich grobkristallin abgeschiedene $PbO_2$-Schichten mit einer durchschnittlichen Kristallitgröße zwischen 5 und 100 $\mu$m. Eine $PbO_2$- Beschichtung auf Edelmetall wie Pt oder platiniertem Titan hat den Vorteil, daß die Neubeschichtung nur mit sehr geringem Aufwand verbunden ist.

Ebenso verwendbar sind massive Bleidioxidelektroden, die je nach Abnutzung einfach nachgeschoben werden können. Alle verwendeten Elektroden sind leicht auswechselbar.

Weiterhin liegt der Erfindung die Aufgabe zugrunde, eine wie eingangs beschriebene Vorrichtung zur Durchführung des Verfahrens zu schaffen, die insbesondere geeignet ist zur Herstellung kleiner, gut dosierbarer Ozonmengen.

Diese Aufgabe wird erfindungsgemäß dadurch gelöst, daß die Anodenkammer von einem zu einer Schlange gewendelten Stab oder Rohr gegen die Kathodenkammer abgegrenzt ist, und daß der Abstand der Windungen der Schlange untereinander derart bemessen ist, daß eine Ionenwanderung möglich ist, daß aber praktisch kein Durchgang von Gas erfolgt.

Vorzugsweise wird der Anodengassammelraum von einem Zylinder gebildet, und die Schlange wird als Kühlschlange ausgebildet und spiralförmig um den Anodengassammelraum und die Anodenkammer angeordnet.

Gemäß einer weiteren bevorzugten Ausführungsform bildet der Träger der aktiven Anodenbeschichtung gleichzeitig eine oder die Behälterinnenwand.

In weiterer Ausführungsform dienen als teildurchlässige Separatoren zwischen Kathoden- und Anodenraum eine geschlitzte oder gelochte Platte bzw. Rohr, ein Kunststoffgitter, ein zu einer Schlange gebogener Stab oder ein Ionenaustauschermembran. Eine weitere Möglichkeit zur Trennung von kathodisch oder anodisch erzeugtem Gas im Bereich der aktiven Elektrodenflächen besteht durch die Verwendung einer nicht bzw. gering turbulenten Elektrolytströmungsführung. Hierbei kann auf mechanische Einbauten zwischen den aktiven Elektrodenflächen weitgehend verzichtet werden.

Die laminare Grenzschicht zwischen beiden Elektrolytströmungen (Katholyt- und Anolytströmung) sorgt bei den erfindungsgemäß verwendeten, viskosen Elektrolyten für eine ausreichende Trennung der anodisch bzw. kathodisch erzeugten Gase im Bereich der aktiven Anodenbeschichtungen. In den zuletzt genannten Ausführungsformen erfolgt die Kühlung der Elektrolyten über die Gefäßaußenwand oder über eine eingebaute Kühlschlange. In einer bevorzugten Ausführungsform besteht die Kathode aus einem zu einer Schlange geformten Rohr, das gleichzeitig als Kühlschlange und Kathode wirkt. Auch die Anode kann gekühlt werden, und z.B. in Form einer Kühlschlange ausgebildet sein.

Eine erfindungsgemäße Vorrichtung kann mit Anodenstromdichten von ca. 10 bis 1000 mA . cm$^{-2}$,d.h. mit Strömen bis über 30 A problemlos betrieben werden und man kann die erzeugte Ozonmenge von nahezu 0 bis über 2gO$_3$.h$^{-1}$ durch Regelung der Stromzufuhr auf jeden beliebigen Wert einstellen.

Für noch größere Mengen müssen lediglich das Zellvolumen, die Anode und die Kühlspirale vergrößert werden. Einzig notwendiges Zubehör ist ein Gleichspannungs-Netzgerät wie zum Beispiel ein einfaches Batterieladegerät für Bleiakkumulatoren, bei dem ggf. je nach Verwendungszweck evtl. Strom oder Spannung regelbar sind.

Eine Glättung des Gleichstroms ist nicht erforderlich, so daß sich das Gerät im einfachsten Fall auf einen Transformator und einen Gleichrichter beschränkt. Zur Kühlung des Elektrolyten reicht Leitungswasser in jedem Falle aus. Ozonkonzentrationen über 20 Gew.-% werden bereits bei Stromdichten von größer 50 mA . cm$^{-2}$ erreicht.

Werden sehr geringe Ozonmengen in hoher Konzentration benötigt, so kann die Anode einfach gegen eine kleinere ausgetauscht werden.

Die Zelle kann sowohl drucklos als auch mit einem durch eine geeignete Sperrflüssigkeit bzw. einem regulierbaren Ventil im Kathodenraum erzeugten Überdruck betrieben werden. Ebenso kann das erzeugte Ozon mit Hilfe eines geeigneten Trägergases in verdünnter Form entnommen werden.

Das Gerät eignet sich damit vor allem für Anwender, die sehr hohe Ozonkonzentrationen benötigen, ohne den außerordentlich kostenintensiven Weg über die Ozonanreicherung gehen zu wollen. Das Gerät eignet sich auch für die Produktion von Ozon an nahezu jedem beliebigen Ort, da es auch mit Batterien oder Akkumulatoren betrieben werden kann. Selbst der Betrieb mit einem Fahrraddynamo oder beispielsweise Kraftfahrzeug-Bordnetzen ist möglich.

Weiterhin ist es sehr gut geeignet zur Herstellung kleiner gut dosierbarer Ozonmengen z.B. für die Ozonolyse in der analytischen organischen Chemie, oder der präparativen im Labormaßstab. Weitere mögliche Verwendungszwecke sind für Demonstrationszwecke, für Versuchs- oder Kleinanlagen in der Abluft- und der Wasserreinigung oder für transportable Desinfektionsanlagen, sowie für Desinfektion, Entkeimung und Behandlung in medizinisch und mikrobiologischem Sektor.

Damit eignet es sich auch für Felddesinfektionen von Trinkwasser oder für den Einsatz in Katastrophengebieten und Entwicklungsländern.

Die Erfindung wird nachstehend anhand von Ausführungsbeispielen unter Bezugnahme auf die Zeichnung näher erläutert. Es zeigt:

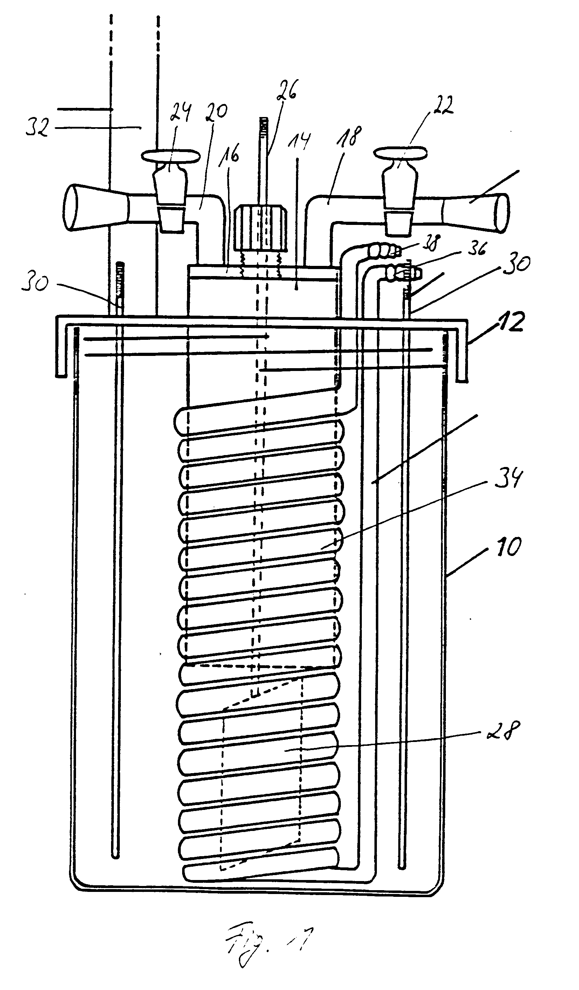

Fig. 1    eine Ausführungsform einer Vorrichtung zur Herstellung von Ozon .

Die in Fig. 1 gezeigte Vorrichtung besteht aus einem Behälter 10, der über einen gasdicht anbringbaren Deckel 12 verschlossen ist. Der Behälter 10 kann aus Glas oder PVC bestehen. Der Deckel 12 ist vorzugsweise auf dem Behälter 10 aufgeschraubt. Durch den Deckel ist ein Sammelzylinder 14 zum Sammeln des Anodengases geführt. Der Zylinder 14 ist über einen Deckel 16 gasdicht abgeschlossen. Durch den Deckel 16 ist der Zylinder 14 mit Leitungen 18 bzw. 20 verbunden, die über Hähne 22 bzw. 24 verschließbar sind. Die Leitungen 18 und 20 dienen zur Entnahme des Anodengases und evtl. zur Abführung des Anodengases über ein Trägergas.

Durch den Deckel 16 des Sammelzylinders 14 ist eine Anode 26 geführt, deren wirksame Fläche 28 unterhalb des Sammelzylinders 14 angeordnet ist. Durch den Deckel 12 sind Kathoden 30 geführt, die aus Stäben oder aus einem geschlossenen Ring bestehen können. Zur Ableitung des Kathodengases ist eine Leitung 32 vorgesehen, die gasdicht in dem Deckel 12 angeordnet ist.

Um den Sammelzylinder 14 und über den Sammelzylinder 14 hinaus, die Anode 28 umschließend, ist eine Kühlschlange 34 angeordnet, deren Zuleitung 36 und deren Ableitung 38 abgedichtet durch den Deckel 12 geführt sind. Der Abstand der Windungen der Kühlschlange untereinander ist dabei derart bemessen, daß eine Ionenwanderung zwischen Anode und Kathode möglich ist, daß aber praktisch kein Durchgang von Gas erfolgen kann, so daß keine Vermischung zwischen Anoden- und Kathodengas eintritt. Das an der Anode 28 entstehende Gas steigt auf und in den Sammelzylinder 14 hinein, in welchem es gesammelt bzw. über die Leitung 18 abgezogen wird.

Anstelle einer spiralförmigen Kühlschlange könnte eine Kühlschlange ausgebildet werden, deren Windungen in einer Ebene liegen, so daß die Kühlschlange dann als Trennwand insbesondere in einem rechteckigen Elektrolysebehälter zwischen einem Kathoden- und einem Anodenraum angeordnet werden könnte. Ebenfalls ist es möglich, die Innenwandung des Behälters zu beschichten, so daß diese gleichzeitig als Elektrode dienen könnte.

Nachstehend werden Ausführungsbeispiele der erfindungsgemäßen Vorrichtung und Ausführungsbeispiele des erfindungsgemäßen Verfahrens angegeben.

Arbeitselektroden (Anoden):

1.a Blattelektroden aus Titan mit Elektrodenblatt der Abmessungen 30•40•1 mm (s. Fig. 1), nach einem bekannten Verfahren direkt mit $PbO_2$ beschichtet.

b. mit platiniertem Titanblatt und $PbO_2$ Beschichtung.

c. mit platiniertem Titan-Streckmetallblatt gleicher Größe.

d. aus Platinblech der Größe 30•40•0,2mm

2. Korbelektrode aus Titan-Streckmetall, mit $PbO_2$ beschichtet, mit unten offenem Korb der Größe: Durchmesser 30mm, Höhe 40mm mit angeschweißtem 4mm dicken Titanstab, der im oberen Teil zur Erhöhung der Leitfähigkeit mit einem Kupfergeflecht und als Isolierung mit einem Schrumpfschlauch überzogen wurde.

Elektrodenfläche: ca. 50 cm$^2$

Elektrolyte:

1.a. Phosphatpufferlösungen mit:

3 Mol $K_2HPO_4$ , 1,5 Mol $KH_2PO_4$ , 2g KF pro Liter Lösung.

b. 2 Mol $K_2HPO_4$ , 1 Mol $KH_2PO_4$ , 2g KF pro Liter Lösung.

2. Natriumsulfatlösung mit 1 Mol $Na_2SO_4$ und 2g KF pro Liter Lösung.

Stromdichten:

Die variablen Anodenstromdichten der Beispiele bewegten sich im Bereich von 50 bis 1.000 mA cm$^{-2}$, entsprechend einem Gesamtstrom von 1,25 bis 50 A.

Ozonkonzentration:

Die in diesem Stromdichtebereich mit fluoridhaltigen Phosphatelektrolyten erzielten Ozonkonzentrationen betragen bis zu 25 Gew.%.

Im folgenden werden einige spezielle Ausführungsbeispiele angeführt.

Beispiel 1 : Elektrolyse mit Blattelektroden 1.a bis d , bei einer Stromdichte von 50 bis 200mA•cm$^{-2}$ (1,25 bis 5A), Elektrolyt 1.a , Temperatur 16°C . Ozonkonzentration im Anodengas über den angegebenen Stromdichtebereich gleichbleibend 24 Gew.% .

Beispiel 2 : Wie in Beispiel 1, jedoch mit Elektrolyt 1.b. Ozonkonzentration im Anodengas über den angegebenen Stromdichtebereich gleichbleibend 21 Gew.% .

Beispiel 3 : Elektrolyse mit Blattelektroden 1.a bis d in 1M $Na_2SO_4$ Lösung (Elektrolyt 2) . Stromdichte 100 mA•cm$^{-2}$ , Temperatur 16°C . Ozonkonzentration: 6 Gew.% .

Beispiel 4 : Elektrolyse mit Elektrode 2 in Elektrolyt 1b.

  a. Anodenstrom 5 A (Temperatur 16°C) Ozonkonzentration 21 Gew.% , (Ausbeute: 0,315g $O_3$•h$^{-1}$)

  b. Anodenstrom 15 A (Temperatur 20°C) Ozonkonzentration 20 Gew.% (Ausbeute: 0,90g $O_3$•h$^{-1}$ )

  c. Anodenstrom 30 A (Temperatur 28°C) Ozonkonzentration 17 Gew.% (Ausbeute: 1,52g $O_3$•h$^{-1}$)

  d. Anodenstrom 50 A (Temperatur 32°C) Ozonkonzentration 15,5 Gew.% (Ausbeute: 2,3g $O_3$•h$^{-1}$)

**Patentansprüche**

1. Verfahren zur Herstellung von Ozon mit einer oder mehreren Anoden aus Bleidioxid oder mit einer oder mehreren mit Bleidioxid beschichteten Anoden aus einem Phosphat-Elektrolyten, der fluoridhaltig sein kann, mittels Gleichstromelektrolyse unter Trennung von Kathoden- und Anodengas, wobei in einem wässrigen $K_2HPO_4/KH_2PO_4$-Elektrolyten oder Natriumsulfat-Elektrolyten als Salzpufferelektrolyt in einem pH-Bereich von 4 bis 10 gearbeitet wird, dessen Konzentration so hoch gewählt wird, daß sich durch die anodische Ansäuerung keine Kristallisation auf der Anode bzw. im Elektrolytgefäß ergibt, die jedoch nicht geringer als 50% seiner Sättigungskonzentration gehalten wird, und Kathoden- und Anodenraum nur im Bereich der Gassammelräume vollständig voneinander getrennt angeordnet werden, jedoch im Bereich der aktiven Elektrodenfläche eine Ionenwanderung und eine gleichmäßige Stromverteilung gewährleistet wird.

2. Verfahren nach Anspruch 1, dadurch gekennzeichnet, daß ein Salzpufferelektrolyt, dessen Konzentration 10 bis 50% unterhalb seiner Sättigungskonzentration liegt, verwendet wird.

3. Verfahren nach Anspruch 1 oder 2, dadurch gekennzeichnet, daß als teildurchlässiger Separator eine Kühlschlange eingesetzt wird, deren einzelne Windungen solche Abstände voneinander haben, daß bei der gewählten Viskosität des Elektrolyten praktisch die Trennung von kathodisch und anodisch erzeugtem Gas bewirkt wird.

4. Verfahren nach Anspruch 1, 2 oder 3, dadurch gekennzeichnet, daß die Viskosität des Elektrolyten durch primäres und sekundäres Kaliumphosphat eingestellt wird.

5. Verfahren nach Anspruch 1 bis 4, dadurch gekennzeichnet, daß der Elektrolyt Fluorid in einer Menge von 200 bis 3000 mg/Liter enthält.

6. Vorrichtung zur Durchführung des Verfahrens nach Anspruch 1, mit einem Behälter, mit einer oder mehreren Anoden aus Bleidioxid oder mit einer oder mehreren mit Bleidioxid beschichteten Anoden und einer oder mehreren Kathoden, wobei die Kathoden- und Anodenräume im Bereich der Gassammelräume voneinander getrennt sind und wobei der Anodengassammelraum von einer von einem Deckel des Behälters zur Bodenfläche des Behälters hin vorstehenden Wandung abgegrenzt ist, dadurch gekennzeichnet, daß die Anodenkammer von einem zu einer Schlange gewendelten Stab oder Rohr (34) gegen die Kathodenkammer abgegrenzt ist, und daß der Abstand der Windungen der Schlange (34) untereinander derart bemessen ist, daß eine Ionenwanderung möglich ist, daß aber praktisch kein Durchgang von Gas erfolgt.

7. Vorrichtung nach Anspruch 6 , dadurch gekennzeichnet, daß der Anodengassammelraum von einem Zylinder gebildet wird, und daß die Schlange als Kühlschlange ausgebildet und spiralförmig um den Anodengassammelraum und die Anodenkammer angeordnet ist.

8. Vorrichtung nach Anspruch 6 oder 7, dadurch gekennzeichnet, daß der Träger der aktiven Anodenbeschichtung gleichzeitig eine oder die Behälterinnenwand bildet.

9. Anwendung der Vorrichtung nach Anspruch 6 bis 8 zur Abluft- und Wasserreinigung, für Desinfektion, Entkeimung und Behandlung im medizinischen und mikrobiologischen Sektor sowie für die Felddesinfektion von Trinkwasser.

## Claims

1. Process for producing ozone using one or more anodes made of lead dioxide or using one or more anodes coated with lead dioxide from a phosphate electrolyte, which may contain fluoride, by means of direct-current electrolysis with the separation of cathode gas and anode gas, which process employs, as salt buffer electrolyte in a pH range of 4 to 10, an aqueous $K_2HPO_4/KH_2PO_4$ electrolyte or sodium sulphate electrolyte whose chosen concentration is so high that no crystallisation occurs on the anode or in the electrolyte vessel as a result of the anodic acidification, but which is kept at not less than 50% of its saturation concentration, and in which process cathode space and anode space are completely separated from one another only in the region of the gas collection spaces, ion migration and a uniform current distribution being ensured, however, in the region of the active electrode surface.

2. Process according to Claim 1, characterised in that a salt buffer electrolyte whose concentration is 10 to 50% below its saturation concentration is used.

3. Process according to Claim 1 or 2, characterised in that a cooling coil is used as partially permeable separator and the spacings of its individual windings from one another are such that, with the chosen viscosity of the electrolyte, the separation of cathodically and anodically produced gas is in practice brought about.

4. Process according to Claim 1, 2 or 3, characterised in that the viscosity of the electrolyte is adjusted by means of primary and secondary potassium phosphate.

5. Process according to Claim 1 to 4, characterised in that the electrolyte contains fluoride in an amount of 200 to 3000 mg/litre.

6. Apparatus for performing the process according to Claim 1, having a container, having one or more anodes made of lead dioxide or having one or more anodes coated with lead dioxide and one or more cathodes, the cathode and anode spaces being separated from one another in the region of the gas collection spaces and the anode gas collection space being bounded by a wall projecting from a lid of the container towards the bottom surface of the container, characterised in that the anode chamber is separated from the cathode chamber by a rod or tube (34) wound into a coil, and in that the mutual spacing of the windings of the coil (34) is dimensioned in such a way that ion migration is possible but that virtually no gas passage occurs.

7. Apparatus according to Claim 6, characterised in that the anode gas collection space is formed by a cylinder and in that the coil is designed as a cooling coil and is helically disposed around the anode gas collection space and the anode chamber.

8. Apparatus according to Claim 6 or 7, characterised in that a container inner wall or the container inner wall simultaneously forms the support for the active anode coating.

9. Use of the apparatus according to Claim 6 to 8 for waste-air and water purification, for disinfection, sterilisation and treatment in the medical and microbiological sector, and for the field disinfection of drinking water.

**Revendications**

1. Procédé de production d'ozone avec une ou plusieurs anodes en dioxyde de plomb ou avec une ou plusieurs anodes recouvertes de dioxyde de plomb, à partir d'un électrolyte de phosphate qui peut contenir du fluor, au moyen d'une électrolyse à courant continu avec séparation du gaz cathodique et du gaz anodique, où on travaille avec un électrolyte aqueux de $K_2HPO_4/KH_2PO_4$ ou avec un électrolyte de sulfate de sodium, comme électrolyte de tampon salin, dans la plage de pH de 4 à 10, dont la concentration est choisie à un niveau élevé tel qu'il ne se produise pas de cristallisation sur l'anode ou dans le compartiment électrolytique, en raison de l'acidification anodique, mais qui ne doit pas être inférieure à 50 % de sa concentration de saturation, et les espaces cathodique et anodique sont disposés de façon à être complètement séparés l'un de l'autre seulement dans la zone des espaces collecteurs de gaz, mais une migration des ions et une répartition homogène du courant sont garanties dans la zone de la surface active des électrodes.

2. Procédé selon la revendication 1, caractérisé en ce qu'on utilise un électrolyte de tampon salin dont la concentration est de 10 à 50 % inférieure à sa concentration de saturation.

3. Procédé selon la revendication 1 ou 2, caractérisé en ce qu'on utilise, comme séparateur partiellement perméable, un serpentin dont les différentes spires présentent entre elles des espaces tels qu'avec la viscosité choisie de l'électrolyte, on obtient pratiquement la séparation du gaz produit du côté cathodique et du gaz produit du côté anodique.

4. Procédé selon la revendication 1, 2 ou 3, caractérisé en ce qu'on règle la viscosité de l'électrolyte au moyen de phosphate de potassium primaire ou secondaire.

5. Procédé selon une des revendications 1 à 4, caractérisé en ce que l'électrolyte contient du fluorure à raison de 200 à 3 000 mg/litre.

6. Dispositif pour la mise en oeuvre du procédé selon la revendication 1, comportant un réservoir, avec une ou plusieurs anodes en dioxyde de plomb ou avec une ou plusieurs anodes recouvertes de dioxyde de plomb et une ou plusieurs cathodes, où les espaces cathodique et anodique sont séparés l'un de l'autre dans la zone des espaces collecteurs de gaz et où l'espace collecteur de gaz anodique est délimité par une paroi saillante d'un couvercle du réservoir en direction du fond du réservoir, caractérisé en ce que la chambre anodique est délimitée, par rapport à la chambre cathodique, par une tige ou un tuyau (34) enroulé(e) en serpentin, et que la distance entre les différentes spires du serpentin (34) sont choisies de manière telle qu'une migration des ions soit possible, mais que du gaz ne puisse pratiquement pas passer.

7. Dispositif selon la revendication 6, caractérisé en ce que l'espace collecteur de gaz anodique est formé par un cylindre et que le serpentin est conformé en serpentin de refroidissement et est disposé en spirale autour de l'espace collecteur de gaz anodique et la chambre anodique.

8. Dispositif selon la revendication 6 ou 7, caractérisé en ce que le support du revêtement actif de l'anode forme en même temps une ou la paroi interne du réservoir.

9. Utilisation du dispositif selon une des revendications 6 à 8 pour la purification de l'air d'échappement ou de l'eau, pour la désinfection, la stérilisation et le traitement dans le domaine médical et microbiologique, ainsi que pour la désinfection de l'eau potable dans les champs.

Fig. 1